# EUROPÄISCHE PATENTSCHRIFT

(11) **EP 0 564 691 B1**
(45) Veröffentlichungstag und Bekanntmachung des Hinweises auf die Patenterteilung: **24.01.1996**
(21) Anmeldenummer: 92108997.5
(22) Anmeldetag: 28.05.1992
(51) Int. Cl.: F16L 1/024

(54) **Verfahren zum Verlegen eines Rohres im Erdreich und Rohr mit Schutzumhüllung**
Method for laying a pipe into the soil and pipe with protective cover
Méthode pour enterrer un tuyau et tuyau avec enveloppe protective

(30) Priorität: 09.04.1992 DE 4211996
(43) Veröffentlichungstag der Anmeldung: 13.10.1993
(73) Patentinhaber: Dipl.-Ing. Dr. Ernst Vogelsang GmbH & Co. KG, D-45699 Herten (DE)
(72) Erfinder: Vogelsang, Rolf, W-4352 Herten (DE)
(74) Vertreter: Andrejewski, Walter, Dr.

(56) Entgegenhaltungen:
- DE-A- 3 313 053
- DE-C- 3 814 488
- DE-U- 7 331 344

## Beschreibung

Die Erfindung betrifft ein Rohr mit Schutzumhüllung für die Verlegung im Erdreich, wobei die Schutzumhüllung aus einem Faservlies und einem offenmaschigen Bewehrungsgitter aus Kunststoffmonofilamenten besteht und wobei Fasern des Faservlieses durch die Maschen des Bewehrungsgitters hindurchgezogen sind.

Ein Rohr mit den beschriebenen Mermalen ist aus DE-C 38 14 488 bekannt. Das Rohr besteht aus Stahl oder Gußeisen und weist als Korrosionsschutz eine Ummantelung aus einer Bitumen/Kunstharz-Legierung oder in Form einer Lackschicht auf Kunstharzbasis auf. Die Schutzumhüllung soll die Korrosionsummantelung des Rohres vor mechanischer Beschädigung durch spitze Gesteinsbrocken und dergleichen schützen. Das Faservlies der außenseitigen Schutzumhüllung kann und soll sich ferner mit Grundwasser vollsaugen, damit im Bedarfsfall ein kathodischer Korrosionsschutz funktioniert.

Aus DE-U 73 31 344 ist eine Korrosionsschutzummantelung für erdverlege Metallrohre bekannt, die aus einer Grundwicklung aus einem Korrosionsschutzband und einer Deckwicklung aus einer 3 bis 5 mm dicken Chemiefaservliesmatte besteht. Die Dicke der Deckwicklung ist so eingerichtet, daß die dem Korrosionsschutz dienende Grundwicklung nicht durch Steine und ausgetrocknete Erdbrocken beim Verfüllen des Rohrgrabens beschädigt wird.

Bei Kunststoffrohren sind Korrosionsschutzmaßnahmen nicht erforderlich. Stoßartige Beanspruchungen, die auch als Impact-Beanspruchungen bezeichnet werden, können jedoch bei Kunststoffrohren Kerbspannungsbruch auslösende Beschädigungen bewirken. Wird das Kunststoffrohr ohne Schutzsand in einem Rohrgraben verlegt, so ist die Gefahr einer solchen Beschädigung groß. Abgesehen von Stoßbeanspruchungen durch auftreffende Gesteinsbrocken treten Impact-Beanspruchungen auf, wenn der Rohrgraben im Anschluß an die Verlegung des Rohres verfüllt und die Verfüllung verdichtet wird. Auch wenn das Kunststoffrohr in Erdsenkungsgebieten verlegt ist, können das Kunststoffrohr schädigende Impact-Beanspruchungen jederzeit auftreten.

Der Erfindung liegt die Aufgabe zugrunde, ein Rohr der eingangs beschriebenen Art anzugeben, welches alle Anforderungen an den Korrosionsschutz erfüllt und ohne Schutzsand in einem Rohrgraben, der anschließend mit Aushub verfüllt und verfestigt wird, verlegt werden kann, ohne daß die Gefahr einer Beschädigung des Rohres während der Verfestigung des Aushubes und/oder durch Erdsenkungen besteht.

Zur Lösung dieser Aufgabe lehrt die Erfindung, daß das Rohr aus einem hart eingestellten Kunststoff besteht und daß die Schutzumhüllung des Kunststoffrohres als Stoßdämpfer zur Aufnahme von Impact-Beanspruchungen dimensioniert ist, die auf das ohne Schutzsand in einem mit Aushub verfüllten und verfestigten Rohrgraben verlegte Rohr wirken. Das Bewehrungsgitter der Schutzumhüllung weist vorzugsweise eine Maschenweite von 1 bis 3 mm auf und ist außenseitig angeordnet. Die Kunststoffasern des Faservlieses sind vorzugsweise etwa haardünn oder dünner. Das Faservlies besteht zweckmäßig aus Endlosfasern. Es kann aber auch aus Stapelfasern aufgebaut sein.

Die Erfindung geht von der Erkenntnis aus, daß die Umhüllung eines Rohres, die aus einem Faservlies und einem offenmaschigen Bewehrungsgitter aus Kunststoffmonofilamenten besteht, wobei die Fasern des Faservlieses durch die Maschen des Bewehrungsgitters hindurchgezogen sowie dadurch das Faservlies und das Bewehrungsgitter vereinigt sind, auch als Impact-Dämpfer ausgebildet werden kann. Dazu müssen die Werkstoffparameter des Faservlieses und des offenmaschigen Bewehrungsgitters in bezug auf Fadenlänge und Fadendicke bzw. in bezug auf Monofilamentdicke entsprechend eingerichtet sein. Dazu muß fernerhin das Faservlies mit dem offenmaschigen Bewehrungsgitter insgesamt ausreichend dick gemacht werden. Die Bemessung kann der Fachmann im Rahmen von Laboruntersuchungen, bei denen auf ein Rohr mit seiner Umhüllung die maximal zu erwartenden Impact-Beanspruchungen aufgebracht werden, ermittelt werden. Ist insoweit die Schutzumhüllung so ausgelegt, daß bei der Erdverlegung und beim Verfüllen des Rohrgrabens, auch bei anschließender Verdichtung, Schäden der Schutzumhüllung und damit Schäden an dem verlegten Rohr nicht auftreten, so werden zusätzliche Effekte erreicht. Wesentlich ist in diesem Zusammenhang, daß die Schutzumhüllung auch dafür sorgt, daß in Erdsenkungsgebieten die eingangs beschriebenen Schäden nicht auftreten können.

Für die weitere Ausbildung und Gestaltung der Schutzumhüllung bieten sich verschiedene Möglichkeiten an. Gemäß einer ersten Ausführungsform der Erfindung ist die Schutzumhüllung als ein an den Umfang des Kunststoffrohres angepaßter Schlauch ausgebildet. Eine andere Ausführungsform der Erfindung sieht vor, daß die Schutzumhüllung als Wickelband ausgebildet ist, welches nahtüberdeckend schraubenwendelförmig auf das Kunststoffrohr aufwickelbar ist.

Gegenstand der Erfindung ist schließlich ein Verfahren zum Verlegen eines Kunststoffrohres im Erdreich von Erdsenkungsgebieten, bei dem auf das Kunststoffrohr vor dem Einlegen in einen Rohrgraben eine als Stoßdämpfer zur Aufnahme von Impact-Beanspruchungen dimensionierte Schutzumhüllung aufgeschoben oder aufgewickelt wird, das mit der Schutzumhüllung ausgerüstete Kunststoffrohr ohne Schutzsand in den Rohrgraben eingebracht wird und der Rohrgraben verfüllt sowie verfestigt wird. Die Schutzumhüllung des Kunststoffrohres hat den schon beschriebenen Aufbau.

Im folgenden wird die Erfindung anhand einer lediglich ein Ausführungsbeispiel darstellenden Zeichnung in bezug auf die Schutzumhüllung ausführlicher erläutert. Es zeigen in schematischer Darstellung:
- Fig. 1: Die Ansicht einer Schutzumhüllung für ein im Erdreich zu verlegendes Kunststoffrohr,
- Fig. 2: einen Querschnitt durch den Gegenstand der Fig. 1 mit zugehörigem Rohr,
- Fig. 3: den stark vergrößerten Ausschnitt A aus dem Gegenstand der Fig. 1,
- Fig. 4: im Maßstab der Fig. 3 den Ausschnitt B aus dem Gegenstand der Fig. 2, und
- Fig. 5: einen Ausschnitt aus einem streifenförmigen Vorprodukt für die Herstellung einer Schutzumhüllung.

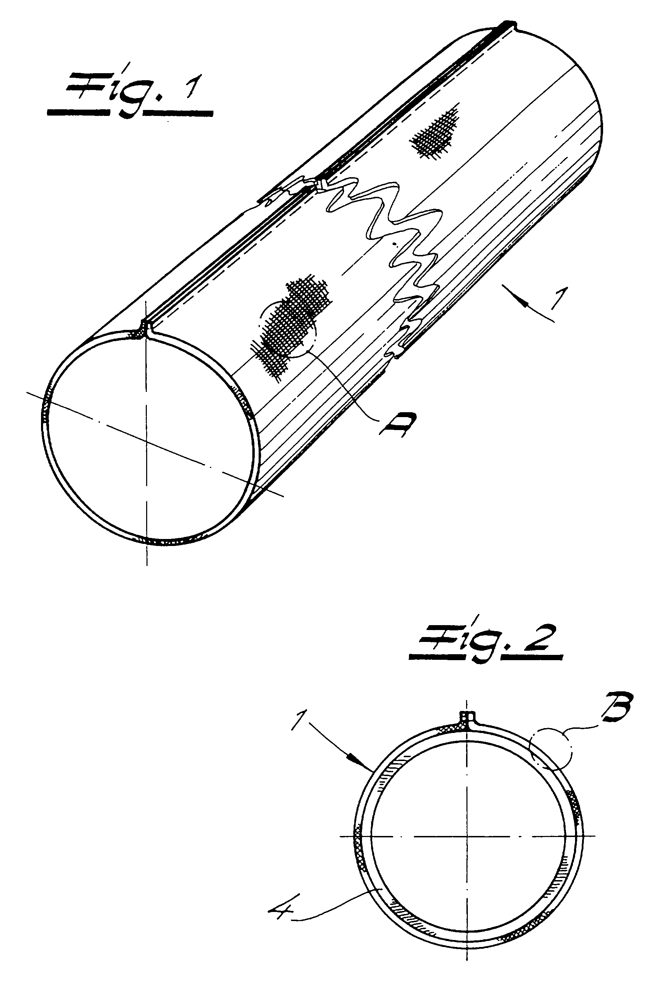

Die Schutzumhüllung 1 besteht aus einem Aggregat aus einem Faservlies 2 und einem offenmaschigen Gitter 3 aus Kunststoffmonofilamenten als Bewehrung. Fasern des Faservlieses 2 sind durch die Maschen des Gitters 3 hindurchgezogen und dadurch sind das Faservlies 2 und das Gitter 3 vereinigt. Ist die Schutzumhüllung 1 montiert, so liegt das Gitter außen. Die Schutzumhüllung 1 ist bezüglich ihrer Dicke so bemessen, daß sie als Stoßdämpfer für Impact-Beanspruchungen funktioniert. Dadurch werden einerseits die umhüllten Rohre gegen Beschädigungen durch Impact-Beanspruchungen geschützt, andererseits ist die Schutzumhüllung selbst so stark, daß sie durch Impact-Beanspruchungen keinen Schaden nimmt. In den Fig. 1 bis 4 ist die Umhüllung 1 eine schlauchförmige Umhüllung. Sie ist auf das zugeordnete Rohr 4 aufgeschoben. Bei dem Rohr 4 handelt es sich um ein Kunststoffrohr aus einem hart eingestellten Kunststoff. Ist das mit der Schutzumhüllung 1 versehene Rohr in den Rohrgraben eingelegt, so kann der Rohrgraben schutzsandfrei mit dem Aushub verfüllt und verfestigt werden. In den Vergrößerungen wurde angedeutet, daß das Faservlies 2 sehr dünne Kunststoffasern 5 aufweist. Es mag sich dabei um solche handeln, die als Endlosfasern über eine Spinnerette mit Kühlluftverstreckung erzeugt sind. Es könnten aber auch Stapelfasern sein. Die schlauchförmige Schutzumhüllung 1 ist dem Umfang des Rohres 4 angepaßt.

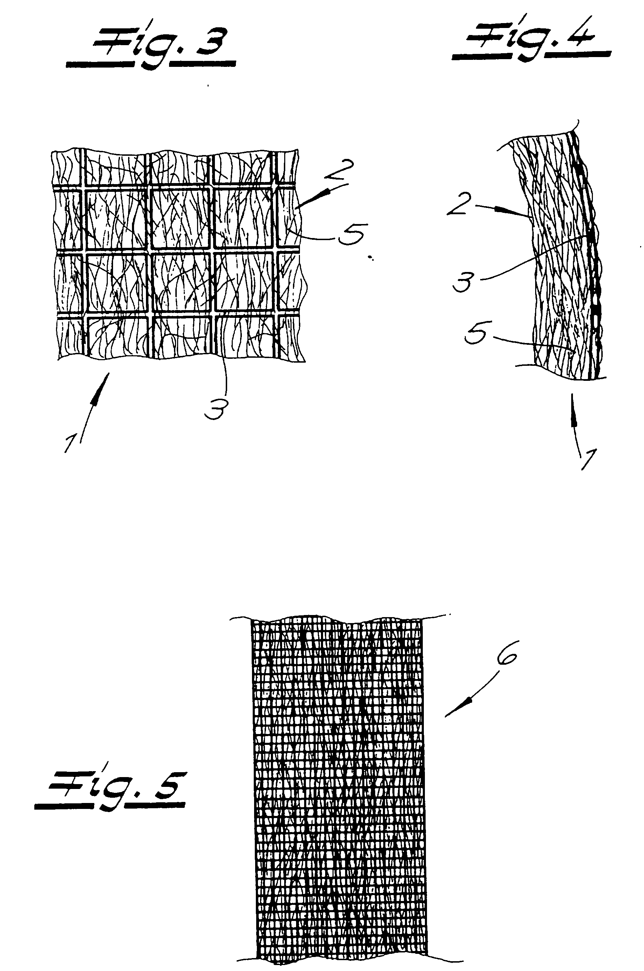

Fig. 5 zeigt einen Vormaterialstreifen 6, der schraubenwendelförmig mit Überlappungsnaht zu einer Schutzumhüllung 1 auf ein Rohr aufwickelbar ist. Bezüglich der Struktur des Vormaterials wird auf die Fig. 3 und 4 verwiesen.

## Patentansprüche

1. Rohr mit Schutzumhüllung für die Verlegung im Erdreich, wobei die Schutzumhüllung (1) aus einem Faservlies (2) und einem offenmaschigen Bewehrungsgitter (3) aus Kunststoffmonofilamenten besteht und wobei Fasern des Faservlieses (2) durch die Maschen des Bewehrungsgitters (3) hindurchgezogen sind, **dadurch gekennzeichnet**, daß das Rohr (4) aus einem hart eingestellten Kunststoff besteht und daß die Schutzumhüllung (1) des Kunststoffrohres (4) als Stoßdämpfer zur Aufnahme von Impact-Beanspruchungen dimensioniert ist, die auf das ohne Schutzsand in einem mit Aushub verfüllten und verfestigten Rohrgraben verlegte Rohr (4) wirken.

2. Rohr nach Anspruch 1, dadurch gekennzeichnet, daß das Bewehrungsgitter (3) der Schutzumhüllung (1) eine Maschenweite von 1 bis 3 mm aufweist und außenseitig angeordnet ist.

3. Rohr nach Anspruch 1 oder 2, dadurch gekennzeichnet, daß die Kunststoffasern (5) des Faservlieses (2) etwa haardünn oder dünner sind.

4. Rohr nach einem der Ansprüche 1 bis 3, dadurch gekennzeichnet, daß das Faservlies (2) aus Endlosfasern besteht.

5. Rohr nach einem der Ansprüche 1 bis 4, dadurch gekennzeichnet, daß die Schutzumhüllung (1) als ein an den Umfang des Kunststoffrohres (4) angepaßter Schlauch ausgebildet.

6. Rohr nach einem der Ansprüche 1 bis 4, dadurch gekennzeichnet, daß die Schutzumhüllung als Wickelband (6) ausgebildet ist, welches nahtüberdeckend schraubenwendelförmig auf das Kunststoffrohr aufwickelbar ist.

7. Verfahren zum Verlegen eines Kunststoffrohres im Erdreich von Erdsenkungsgebieten, bei dem
auf das Kunststoffrohr (4) vor dem Einlegen in einen Rohrgraben eine als Stoßdämpfer zur Aufnahme von Impact-Beanspruchungen dimensionierte Schutzumhüllung (1) aufgeschoben oder aufgewickelt wird, die aus einem Faservlies (2) und einem offenmaschigen Bewehrungsgitter (3) aus Kunststoffmonofilamenten besteht, wobei Fasern des Faservlieses (2) durch die Maschen des Bewehrungsgitters (3) hindurchgezogen sind,
das mit der Schutzumhüllung (1) ausgerüstete Kunststoffrohr (4) ohne Schutzsand in den Rohrgraben eingebracht wird und
der Rohrgraben verfüllt sowie verfestigt wird.

## Claims

1. A pipe having a protective cladding for laying in the ground, wherein the protective cladding (1) consists of a non-woven fibrous fabric (2) and an open-meshed reinforcing grid (3) made of plastics monofilaments, and wherein fibres of the non-woven fibrous fabric (2) are pulled through the meshes of the reinforcing grid (3), characterised in that the pipe (4) consists of a plastics which is produced in a hard form and that the protective cladding (1) of the plastics pipe (4) is designed as a shock absorber for impact loadings which act on a pipe (4) laid without protective sand in a pipe trench which is filled with excavated earth and compacted.

2. A pipe according to claim 1, characterised in that the reinforcing grid (3) of the protective cladding (1) has a mesh width of 1 to 3 mm and is disposed on the outside.

3. A pipe according to claim 1 or 2, characterised in that the plastic fibres (5) of the non-woven fibrous fabric (2) are approximately of hair-like thinness or thinner.

4. A pipe according to any one of claims 1 to 3, characterised in that the non-woven fibrous fabric (2) consists of continuous fibres.

5. A pipe according to any one of claims 1 to 4, characterised in that the protective cladding (1) is constructed as a flexible tube matched to the circumference of the plastics pipe (4).

6. A pipe according to any one of claims 1 to 4, characterised in that the protective cladding is constructed as a winding strip (6) which can be wound on the plastics pipe in the form of a spiral with overlapping joints.

7. A method of laying a plastics pipe in the ground of soil subsidence regions, in which
a protective cladding (1) designed as a shock absorber for absorbing impact loadings is slid on to or wound on the plastics pipe (4) before the latter is laid in a pipe trench, which protective cladding consists of a non-woven fibrous fabric (2) and an open-meshed reinforcing grid (3) made of plastics monofilaments, wherein fibres of the non-woven fibrous fabric (2) are pulled through the meshes of the reinforcing grid (3),
the plastics pipe (4) fitted with the protective cladding (1) is introduced into the pipe trench without protective sand, and
the pipe trench is filled and compacted.

## Revendications

1. Tube comportant une enveloppe de protection pour sa mise en place dans le sol, et dans lequel l'enveloppe de protection (1) est constituée par une nappe de fibres (2) et par une grille d'armature (3) à mailles ouvertes, réalisée en monofilaments de matière plastique, et dans lequel les fibres de la nappe de fibres (2) passent à travers les mailles de la grille d'armature (3), caractérisé par le fait que le tube (4) est réalisé en une matière plastique réglée de manière à être dure et que l'enveloppe de protection (1) du tube en matière plastique (4) est dimensionnée en tant qu'amortisseur de chocs manière à supporter des contraintes dues à des chocs qui agissent sur le tube (4) disposé sans sable de protection dans une tranchée logeant le tube et qui est remplie et consolidée par des déblais.

2. Tube selon la revendication 1, caractérisé en ce que la grille d'armature (3) de l'enveloppe protectrice (1) possède des mailles d'une taille de 1 à 3 mm et est disposée sur le côté extérieur.

3. Tube selon la revendication 1 ou 2, caractérisé en ce que les fibres en matière plastique (5) de la nappe de fibres (2) possèdent approximativement la minceur d'un cheveu ou sont plus minces.

4. Tube selon l'une des revendications 1 à 3, caractérisé en ce que la nappe de fibres (2) est constituée par des fibres sans fin.

5. Tube selon l'une des revendications 1 à 4, caractérisé en ce que l'enveloppe de protection (1) est réalisée sous la forme d'un tuyau adapté à la périphérie du tube en matière plastique (4).

6. Tube selon l'une des revendications 1 à 4, caractérisé en ce que l'enveloppe de protection est réalisée sous la forme d'une bande bobinée (6), qui peut être enroulée sur le tube en matière plastique selon une configuration hélicoïdale avec recouvrement du joint.

7. Procédé pour poser un tube en matière plastique dans le sol de zones d'affaissement de terrain, selon lequel
avant l'insertion dans une tranchée logeant le tube, on emmanche ou on enroule sur le tube en matière plastique (4) une enveloppe de protection (1) dimensionnée en tant qu'amortisseur de chocs de façon à absorber des contraintes dues à des chocs, et qui est constituée par une nappe de fibres (2) et une grille d'armature (3) à mailles ouvertes, constituée par des monofilaments de matière plastique, des fibres de la nappe de fibres (2) passant à travers les mailles de la grille d'armature (3),
on insère le tube en matière plastique (4) équipé de l'enveloppe de protection (1), sans aucun sable de protection, dans la tranchée logeant le tube, et
on remplit et on consolide la tranchée logeant le tube.
